# EUROPEAN PATENT APPLICATION

(11) **EP 4 484 035 A1**
(43) Date of publication of application: **01.01.2025**
(21) Application number: 24181859.0
(22) Date of filing: 13.06.2024
(51) Int. Cl.: B22F 12/00, B22F 12/30, B33Y 30/00, F16J 15/02, B22F 1/10, B22F 10/14, B22F 10/28, B33Y 10/00

(54) **CONTAINER AND ADDITIVE FABRICATING SYSTEM**

(30) Priority: 27.06.2023 JP 2023105080
(71) Applicant: Ricoh Company, Ltd., Tokyo 143-8555 (JP)
(72) Inventor: SAKURA, Shozo, Tokyo, 143-8555 (JP)
(74) Representative: SSM Sandmair

(57) **Abstract**

A container (22) includes a bottom portion (48) movable in a first direction; a side wall portion (49) surrounding a circumference of the bottom portion (48), a sealer (55) attached to the circumference of the bottom portion to seal a gap between the circumference of the bottom portion (48) and the side wall portion (49) in a second direction intersecting the first direction. The sealer (55) includes a first sealing layer (61) in contact with the side wall portion and formed by a first material and a second sealing layer (62) attached to the bottom portion (48) and formed by a second material different from the first material of the first sealing layer (61).

## Description

### BACKGROUND

### Technical Field

Embodiments of the present disclosure relate to a container, a fabricating apparatus, and a fabricating system.

### Related Art

As a method for fabricating an object without using a mold, a method that emits a laser beam or adds a fabrication liquid to a fabrication material that is accommodated in a container to bond the fabrication material is known.

The container used in such a fabricating method typically includes a bottom portion and a side wall portion disposed around the bottom portion. In addition, the bottom portion and the side wall portion may be used as separate members to from the container, like a case where the bottom portion can rise and fall. In such a case, a sealer is disposed such that a fabrication material does not leak from a gap between the bottom portion and the side wall portion.

For example, in Japanese Unexamined Patent Application Publication No. 2022-533466, a first sealer and a second sealer apart from the first sealer are disposed as two sealers that seal a gap between a plate assembly supporting a powder material and an inner wall of a process chamber. In addition, an example is given in which the first sealer has high abrasion resistance.

A sealer having multiple properties such as a sealing property and durability in good balance may be required. However, it is difficult to select a material having desired properties from a single material.

An object of the present disclosure is to provide a sealer having desired properties.

### SUMMARY

According to an embodiment of the present disclosure, container includes a bottom portion movable in a first direction; a side wall portion surrounding a circumference of the bottom portion, a sealer attached to the circumference of the bottom portion to seal a gap between the circumference of the bottom portion and the side wall portion in a second direction intersecting the first direction. The sealer includes a first sealing layer in contact with the side wall portion and formed by a first material and a second sealing layer attached to the bottom portion and formed by a second material different from the first material of the first sealing layer.

According to an embodiment of the present disclosure, a fabricating system includes the fabrication apparatus including the container accommodating a fabrication material containing metal or metal powder, a fabrication liquid adding device to add a fabrication liquid to the fabrication material accommodated in the container to fabricate a fabricated object, and a least one of a drying apparatus to dry the fabricated object formed by the fabrication apparatus, a removing apparatus to remove an excess fabrication material attached to the fabricated object, or a sintering apparatus to sinter the fabricated object.

According to an embodiment of the present disclosure, a sealer having desired properties can be provided.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a fabricating system according to a first embodiment of the present disclosure;
FIG. 2 is a flowchart of a fabricating process conducted by the fabricating system according to the first embodiment of the present disclosure;
FIG. 3 is a diagram illustrating a configuration of a fabricating apparatus according the first embodiment of the present disclosure;
FIG. 4 is a block diagram illustrating a controller of the fabricating apparatus according the first embodiment of the present disclosure;
FIG. 5 is a diagram illustrating an operation of the fabricating apparatus according to the first embodiment of the present disclosure;
FIG. 6 is a diagram illustrating an operation of the fabricating apparatus according to the first embodiment of the present disclosure;
FIG. 7 is a diagram illustrating an operation of the fabricating apparatus according to the first embodiment of the present disclosure;
FIG. 8 is a diagram illustrating an operation of the fabricating apparatus according to the first embodiment of the present disclosure;
FIG. 9 is a diagram illustrating an operation of the fabricating apparatus according to the first embodiment of the present disclosure;
FIG. 10 is a diagram illustrating an operation of the fabricating apparatus according to the first embodiment of the present disclosure;
FIG. 11 is a diagram illustrating a sealing structure of a fabrication chamber according to the first embodiment of the present disclosure;
FIG. 12 is a cross-sectional view of a sealer according to the first embodiment of the present disclosure;
FIG. 13 is a diagram illustrating the sealer as a single component before being attached to a fabrication stage, according to the first embodiment of the present disclosure;
FIG. 14 is a diagram illustrating the sealer attached to the fabrication stage, according to the first embodiment of the present disclosure;
FIG. 15 is a diagram illustrating a structure of a connecting portion of the sealer according to the first embodiment of the present disclosure;
FIG. 16 is a diagram illustrating a modification of the connecting portion of the sealer according to the first embodiment of the present disclosure;
FIG. 17 is a cross-sectional view of the sealer in an uncompressed and unloaded state, according to the first embodiment of the present disclosure;
FIG. 18 is a cross-sectional view of the sealer according to a second embodiment of the present disclosure; and
FIG. 19 is a diagram illustrating a fabricating apparatus according to the second embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments will be described below with reference to the accompanying drawings. In the drawings, the same or like reference signs denote like elements having substantially the same or corresponding configurations, and descriptions thereof may be omitted.

### Configuration of Forming System

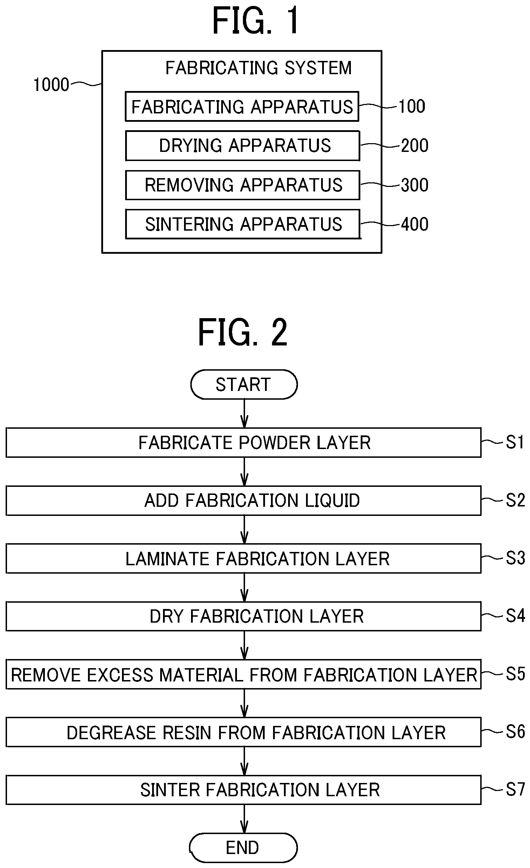

FIG. 1 is a schematic diagram illustrating a fabricating system 1000 according to a first embodiment of the present disclosure.

The fabricating system 1000 illustrated in FIG. 1 includes a fabricating apparatus 100, a drying apparatus 200, a removing apparatus 300, and a sintering apparatus 400.

The fabricating apparatus 100 is an apparatus that forms a powder layer containing a fabrication material and adds a fabrication liquid to the powder layer to form a fabrication layer. The fabricating apparatus 100 forms a three-dimensional object by laminating the fabrication layers. Examples of the fabrication material include, but not limited to, a metal powder containing aluminum, another metal, or a metal alloy, and a powder containing ceramics or glass.

In an embodiment of the present disclosure, in the container, the container accommodates a fabrication material containing metal or metal powder.

The drying apparatus 200 is an apparatus that conducts a drying process on the object formed by the fabricating apparatus 100. A liquid component such as a solvent remaining in the fabricated object is evaporated and removed by the drying process.

The removing apparatus 300 is an apparatus that removes the excess fabrication material attached to the fabricated object after the drying process. As a method of removing the fabrication material, a method that removes an excess fabrication material by air blowing or a method that removes an excess fabrication material by immersing the fabricated object in a removing solution can be used.

The sintering apparatus 400 is an apparatus that heats a fabricated object from which the excess fabrication material has been removed to degrease a resin component contained in the fabricated object, and sinters the fabrication material. Since the fabrication material is sintered, a sintered body in which the fabrication material is united as one body is obtained. The degreasing process and the sintering process may be conducted in succession using the same apparatus or may be conducted using separate apparatuses.

The fabricating system 1000 may also include a post-processing apparatus. The post-processing apparatus is not limited to any particular apparatus and can be appropriately selected according to the purpose. The post-processing apparatus is, for example, a surface protection processing apparatus that conducts a surface protection process on a fabricated object after removing an excess fabrication material, or a coating apparatus that conducts a coating on a fabricated object after removing an excess fabrication material. The fabricating apparatus 100, the drying apparatus 200, the removing apparatus 300, and the sintering apparatus 400 may be separate apparatuses, or may be partially or entirely configured to be one apparatus.

### Fabricating Process

FIG. 2 is a flowchart of a fabricating process conducted by the fabricating system 1000 according to the first embodiment of the present disclosure.

As illustrated in FIG. 2, in the fabricating process according to the first embodiment of the present disclosure, a powder layer fabricating process (step S1) that forms a powder layer containing a fabrication material by the fabricating apparatus 100 is conducted. A fabrication liquid adding process (step S2) that adds a fabrication liquid to the powder layer by the fabricating apparatus 100 is conducted. The fabrication material forming the powder layer is bonded by adding the fabrication liquid to the power layer, and a fabrication layer is formed. The powder layer fabricating process (step S1) and the fabrication liquid adding process (S2) are repeated in order, and a laminating process (step S3) that laminates the fabrication layers is conducted. As a result, a fabricated object in which the fabrication layers are laminated is formed.

A drying process (step S4) that dries the fabricated object is conducted. In the drying process (step S4), since the fabricated object is heated by the drying apparatus 200, liquid components such as a solvent remaining in the fabricated object are vaporized and removed. An excess material removing process (step S5) that removes an excess fabrication material attached to the fabricated object is conducted by the removing apparatus 300. After conducting the excess material removing process (step S5), a degreasing process (step S6) is conducted by the sintering apparatus 400. In the degreasing process (step S6), since the fabricated object is heated in an atmosphere containing an inert gas, the resin in the fabricated object is removed. As a result, a degreased body is formed. A sintering process (step S7) is conducted by the sintering apparatus 400, and a sintered body formed by sintering the degreased body is obtained.

### Configuration of Fabricating Apparatus

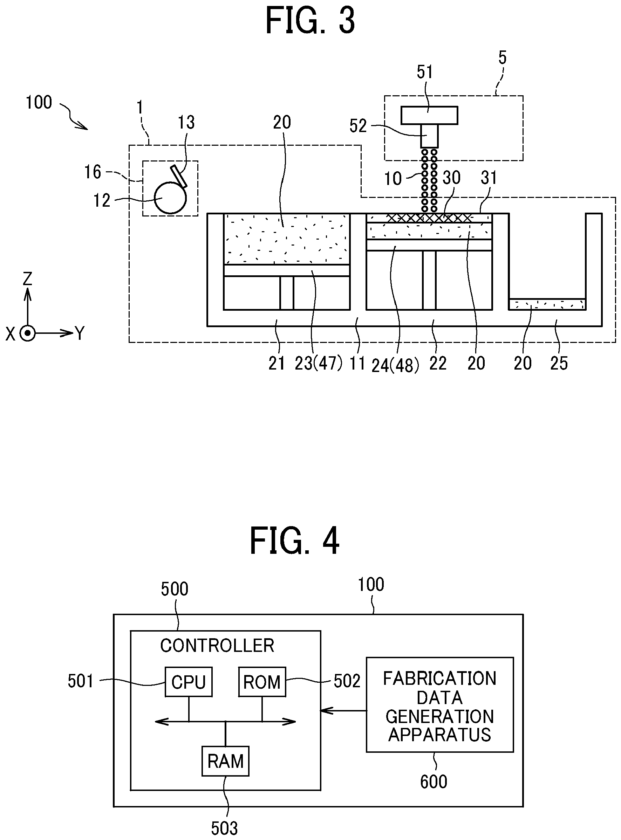

The configuration of the fabricating apparatus 100 according to the first embodiment of the present disclosure will be described with reference to FIG. 3.

The fabricating apparatus 100 illustrated in FIG. 3 is a fabricating apparatus using a powder layer fabricating method (binder jetting method) including a forming device 1 and a fabrication liquid adding device 5 (fabrication liquid applicator).

### Forming Device

The forming device 1 includes a powder chamber 11 and a laminating unit 16. The powder chamber 11 includes a supply chamber 21, a fabrication chamber 22, and a collection chamber 25. The supply chamber 21 is a container that accommodates the fabrication material 20 supplied to the fabrication chamber 22. The fabrication chamber 22 is a container that accommodates a powder layer 31 over which the powder fabrication material 20 is spread and a fabrication layer 30 to which the powder fabrication material 20 is bonded. The collection chamber 25 is a container that collects and accommodate the excess fabrication material 20 overflowing from the fabrication chamber 22. The supply chamber 21, the fabrication chamber 22, and the collection chamber 25 are all formed in a box shape with an open upper face. The bottom portion 47 of the supply chamber 21 is configured as a supply stage 23 that can rise and fall in the vertical direction Z (Z-direction in FIG. 3). The bottom portion 48 of the fabrication chamber 22 is also configured as a fabrication stage 24 that can raise and fall in the vertical direction Z.

In an embodiment of the present disclosure, the vertical direction Z is also referred to as a first direction, and a direction orthogonal to or intersecting the first direction is referred to as a second direction.

The laminating unit 16 is a unit in which the powder layers 31 are laminated by repeatedly forming the powder layers 31 in the fabrication chamber 22. The laminating unit 16 includes a flattening unit 12 and a removing unit 13.

The flattening unit 12 is a unit that supplies the fabrication material 20 from the supply chamber 21 to the fabrication chamber 22 and flattens the fabrication material 20 by reciprocating in the transverse direction (Y-direction in FIG. 3) to form the powder layer 31. In an example illustrated in FIG. 3, a rotating body referred to as a recoater is used as the flattening unit 12. A plate-shaped blade or bar may be used as the flattening unit 12.

The removing unit 13 is a unit that removes the fabrication material 20 attached to the flattening unit 12. In the example illustrated in FIG. 3, a plate-shaped member that comes into contact with the flattening unit 12 to remove the fabrication material 20 is used as the removing unit 13. The removing unit 13 can reciprocate together with the flattening unit 12 in contact with the flattening unit 12.

### Fabrication Liquid Adding Device

The fabrication liquid adding device 5 is a device that adds the fabrication liquid 10 to the powder layer 31 formed in the fabrication chamber 22 to form the fabrication layer 30. The fabrication liquid adding device 5 includes a head 52 and a carriage 51.

In an embodiment of the present disclosure, a fabricating apparatus includes, the container and a fabrication liquid adding device to add a fabrication liquid to a fabrication material accommodated in the container.

In an embodiment of the present disclosure, a fabricating system includes the fabrication apparatus and a least one of a drying apparatus to dry a fabricated object formed by the fabrication apparatus, a removing apparatus to remove an excess fabrication material attached to the fabricated object, or a sintering apparatus to sinter the fabricated object.

The head 52 is a unit that discharges the fabrication liquid 10 to the powder layer 31. The head 52 is, for example, an inkjet head, and includes a nozzle row in which multiple nozzles are arranged. The fabrication liquid may be added by a dispenser method in addition to an inkjet method. Further, the fabrication liquid adding device 5 may include four heads 52 that add a cyan fabrication liquid, a magenta fabrication liquid, a yellow fabrication liquid, and a black fabrication liquid to form a color fabricated object.

The carriage 51 is a unit that mounts the head 52 and reciprocates the head 52 in two directions (X-direction and Y-direction in FIG. 3) orthogonal to each other on a horizontal plane and in the vertical direction Z (Z-direction in FIG. 3).

FIG. 4 is a block diagram of a controller of the fabricating apparatus 100 according the first embodiment of the present disclosure.

The controller 500 illustrated in FIG. 4 includes a central processing unit (CPU) 501, a read-only memory (ROM) 502 that stores a program for executing control and other fixed data, and a random-access memory (RAM) 503 that temporarily stores fabrication data. The controller 500 receives the fabrication data from the fabrication data generation apparatus 600 such as an external computer.

The fabrication data generation apparatus 600 generates fabrication data obtained by slicing a fabricated object of the final form for each fabrication layer 30, and the controller 500 controls the operation of fabricating each fabrication layer 30 based on the fabrication data. The fabrication data generation apparatus 600 may be separate from the fabricating apparatus 100 or may be unified with the fabricating apparatus 100. The controller 500 may be disposed inside the fabricating apparatus 100 or outside the fabricating apparatus 100.

### Operation of Fabricating Apparatus

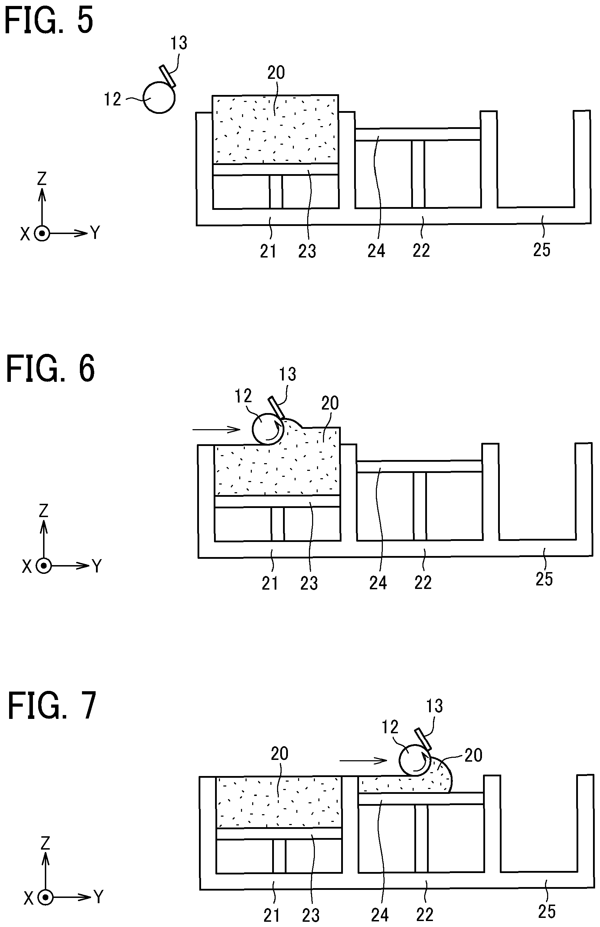

The operation of the fabricating apparatus 100 according to the first embodiment of the present disclosure will be described with reference to FIGS. 5 to 10.

As illustrated in FIG. 5, the height of the supply stage 23 is adjusted such that the upper face of the fabrication material 20 accommodated in the supply chamber 21 is located above the upper face of the supply chamber 21 by a predetermined thickness. On the other hand, the fabrication stage 24 of the fabrication chamber 22 is adjusted so as to be located downward from the upper face of the fabrication chamber 22 by a height corresponding to the thickness of the powder layer 31.

As illustrated in FIG. 6, the flattening unit 12 is moved in the transverse direction (Y-direction) from the supply chamber 21 toward the fabrication chamber 22. As a result, the fabrication material 20 located above the upper face of the supply chamber 21 is pushed and moved by the flattening unit 12.

As illustrated in FIG. 7, when the flattening unit 12 moves from the supply chamber 21 to the fabrication chamber 22, the fabrication material 20 is supplied on the fabrication stage 24. At this time, since the flattening unit 12 moves in parallel with the stage face (upper face) of the fabrication stage 24, the fabrication material 20 on the fabrication stage 24 is flattened by the flattening unit 12, and the powder layer 31 having a uniform thickness is formed.

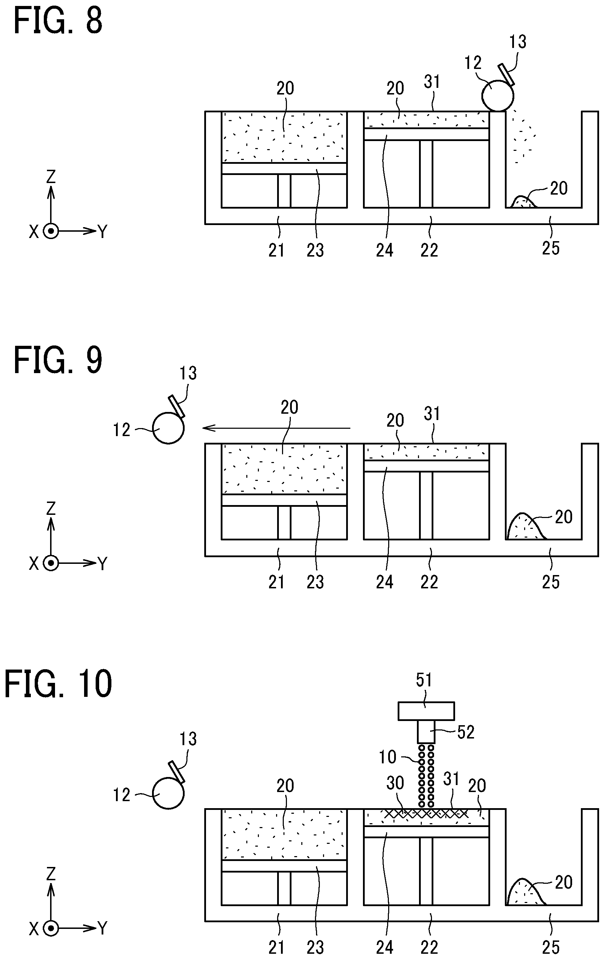

As illustrated in FIG. 8, when the flattening unit 12 reaches an end of the fabrication chamber 22, the powder layer 31 is formed all over the fabrication stage 24. The excess fabrication material 20 overflowing from the fabrication chamber 22 is dropped and collected in the collection chamber 25. When the flattening unit 12 has moved to the end of the fabrication chamber 22, the flattening unit 12 temporarily stops moving. As illustrated in FIG. 9, the flattening unit 12 moves in the direction opposite to the moving direction at the time of forming the powder layer, and returns to the initial position.

As illustrated in FIG. 10, the head 52 is disposed at a position facing the powder layer 31, and the fabrication liquid 10 is discharged from the head 52 and added to the powder layer 31. As a result, the fabrication material 20 in the portion to which the fabrication liquid 10 is added is bonded, and the fabrication layer 30 is formed. Specifically, when the fabrication liquid 10 containing a resin is attached to the fabrication material 20, the fabrication materials 20 are bonded to each other through the resin, and the fabrication layer 30 is formed. As the resin contained in the fabrication liquid 10, for example, polyvinyl alcohol (PVA) or polyvinyl pyrrolidone (PVP) is used. The fabrication liquid 10 is not limited to one containing such a resin described above, but may contain a crosslinking agent and an organic solvent. In the case where the fabrication liquid 10 contains a crosslinking agent and an organic solvent, the fabrication liquid 10 added to the fabrication material 20 dissolves and crosslinks the resin covering the fabrication material 20, and the fabrication material 20 is bonded.

After the first layer of the fabrication layer 30 is formed, the heights of the supply stage 23 and the fabrication stage 24 are adjusted again in the same manner, and the second layer of the powder layer 31 is formed on the fabrication stage 24 by reciprocating the flattening unit 12. The fabrication liquid 10 is added from the head 52 to the second layer of the powder layer 31, and the second layer of fabrication layer 30 is formed. The same steps are repeated to laminate multiple fabrication layers 30 and a fabricated object is formed.

The excess fabrication material 20 overflowing from the collection chamber 25 may be returned to the supply chamber 21. For example, the fabrication material 20 in the collection chamber 25 is transferred to a fabrication material supply device disposed on the upper portion of the supply chamber 21. The fabrication material 20 stored in the fabrication material supply device may be supplied to the supply chamber 21 when the fabricating apparatus 100 starts the fabricating operation, or when the amount of the fabrication material 20 in the supply chamber 21 decreases. As a method that transfers the fabrication material 20 to the fabrication material supply device, a screw conveyor method using a screw or an air transport method using air can be used.

### Sealing Structure of Fabrication Chamber

A sealing structure of the fabrication chamber 22 according to the first embodiment of the present disclosure will be described.

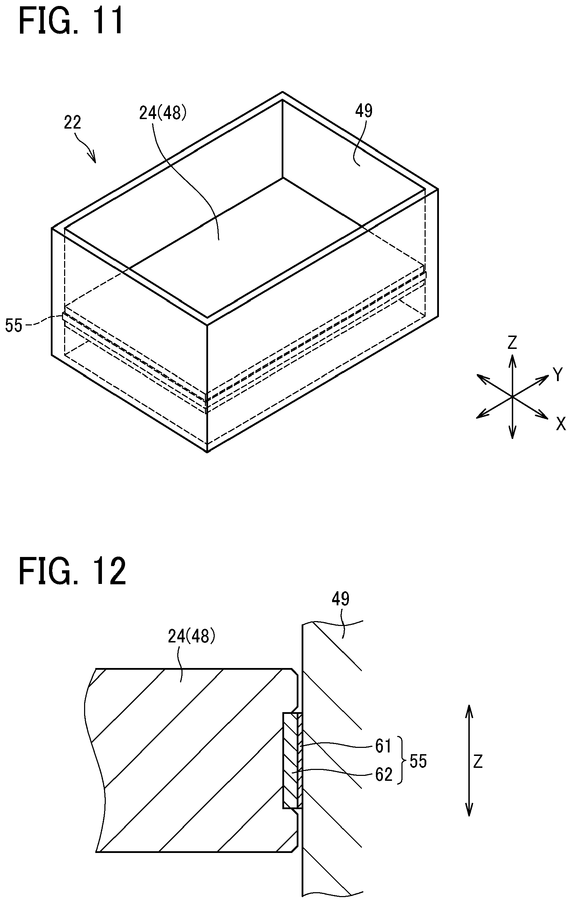

As illustrated in FIG. 11, the fabrication chamber 22 includes a fabrication stage 24, a side wall portion 49, and a sealer 55. The side wall portion 49 is a wall disposed around the fabrication stage 24 and extending in the vertical direction Z. In this case, since the fabrication stage 24 is formed in a rectangular plate shape, the side wall portion 49 is formed by a rectangular frame body continuously surrounding the circumference of the fabrication stage 24. The shapes of the fabrication stage 24 and the side wall portion 49 may be other than rectangular.

The sealer 55 is attached to the entire circumference of the fabrication stage 24 and is interposed between the fabrication stage 24 and the side wall portion 49. Thus, the gap between the fabrication stage 24 and the side wall portion 49 is sealed by the sealer 55. The sealer 55 is also attached to the fabrication stage 24. Accordingly, when the fabrication stage 24 rises or falls in the vertical direction Z, the sealer 55 rises or falls together with the fabrication stage 24 while sliding against the side wall portion 49.

In an embodiment of the present disclosure, in the container, the sealer surrounds entire of the circumference of the bottom portion.

In an embodiment of the present disclosure, in the container, the sealer moves together with the bottom portion in the first direction in a vertical direction.

### Problem with Sealing Structure

The problem of the sealing structure in the fabrication chamber 22 will be described.

The sealer 55 used in the fabrication chamber 22 preferably has a good sealing property between the fabrication stage 24 and the side wall portion 49, and also has a good sliding property with respect to the side wall portion 49 when the fabrication stage 24 rises or falls. In addition, since the fabrication chamber 22 is accommodated in the drying chamber together with the fabricated object when the fabricated object is dried, the sealer 55 is required to have heat-resistance that can withstand high temperatures during drying.

Typically, a material used for a sealer is urethane foam. The urethane foam is a material suitable for obtaining both a sliding property and a sealing property because sliding resistance associated with repulsive force at a time when the urethane form is compressed between the fabrication stage 24 and the side wall portion 49 is not likely to be increased. However, the urethane foam has a disadvantage that permanent deformation due to compression is easily generated when used in a temperature environment exceeding 100 degree Celsius (°C). Accordingly, in the drying process that may be performed in a temperature environment of 140°C or more, there is a concern that the permanent deformation of the urethane foam is increased and the sealing property is lowered.

On the other hand, there is rubber used for an O-ring as a material having a small permanent strain even under a high temperature environment. However, since rubber has a large friction coefficient and a large sliding resistance accompanied with a repulsive force at a time when the rubber is compressed, it is difficult to obtain a good sliding property. In addition, although a lubricant such as oil is typically used to obtain the sliding property of the rubber, it is not preferable to use lubricant in the fabrication chamber 22 that accommodates the fabrication material 20 of powder. Thus, rubber is less likely to apply to the material of the sealer 55 used in the fabrication chamber 22. Further, since the rubber sealer is typically formed in a ring shape, a large-diameter sealer is required in the case of the fabrication stage 24 having a large size, which may also lead to higher cost.

As described above, it is difficult to form a sealer having desired properties such as a sealing property, a sliding property, and heat resistance and being suitable for a container containing powder by using a single material such as urethane foam or rubber used as a sealer in the related art.

In the first embodiment of the present disclosure, the following sealer is used as the sealer 55 used in the fabrication chamber 22. The structure of the sealer 55 according to the first embodiment of the present disclosure will be described below.

### Structure of Sealer

FIG. 12 is a cross-sectional view of the sealer 55 according to the first embodiment of the present disclosure.

As illustrated in FIG. 12, the sealer 55 is formed in a two-layer structure including a first sealing layer 61 and a second sealing layer 62. The first sealing layer 61 is in contact with the side wall portion 49. On the other hand, the second sealing layer 62 is in contact with the fabrication stage 24 that is the bottom portion 48. Further, at least one face of the first sealing layer 61 and at least one face of the second sealing layer 62 are in contact with each other. The second sealing layer 62 is buried in the bottom portion 48. The sealer 55 may be directly in contact with the bottom portion 48 or the side wall portion 49. Specifically, at least a part of the side wall portion 49 and at least a part of the first sealing layer 61 may be in contact with each other. Alternatively, at least a part of the bottom portion 48 and at least a part of the second sealing layer 62 may be in contact with each other. In addition, the sealer 55 may be in contact with the side wall portion 49 or the bottom portion 48 through a double-sided adhesive tape as a predetermined component. The predetermined component may be attached to a part or the entire face of the first sealing layer 61 facing the side wall portion 49. The predetermined component may be attached to a part or the entire face of the second sealing layer 62 facing the bottom portion 48. The sealer 55 may be disposed in a region between the bottom portion 48 and the side wall portion 49.

In FIG. 12, the bottom portion 48 moves in the vertical direction Z (first direction), and the sealer 55 is attached to the bottom portion 48 in a direction (second direction) orthogonal to or intersecting the first direction. Preferably, the second direction is orthogonal to the first direction.

In an embodiment of the present disclosure, in the container, at least a part of the first sealing layer is in contact with the second sealing layer.

In an embodiment of the present disclosure, in the container, the circumference of the bottom portion has a recess surrounding the circumference of the bottom portion, and the sealer is in the recess of the bottom portion.

The first sealing layer 61 and the second sealing layer 62 are formed by different materials. Specifically, the first sealing layer 61 is formed of a nonwoven fabric made of polytetrafluoroethylene (PTFE), which is referred to as "PTFE felt". The second sealing layer 62 is formed of an organopolysiloxane composition in the form of a foam, which is referred to as "silicone foam".

In an embodiment of the present disclosure, a container includes a bottom portion movable in a first direction, a side wall portion surrounding a circumference of the bottom portion, a sealer attached to the circumference of the bottom portion to seal a gap between the circumference of the bottom portion and the side wall portion in a second direction intersecting to the first direction. The sealer includes a first sealing layer in contact with the side wall portion and formed by a first material, and a second sealing layer attached to the bottom portion and formed by a second material different from the first material of the first sealing layer.

In an embodiment of the present disclosure, in the container, the second sealing layer is formed by a silicone foam.

Both the PTFE felt and the silicone foam are materials having higher heat resistance. Further, since the silicone foam has a higher compressibility than the PTFE felt, it is a suitable material in terms of the sealing property. However, when the silicone foam is compressed, the repulsive force of the silicone foam is small but has a disadvantage that the coefficient of friction is large and the strength against the shearing force generated in association with sliding is also low. Accordingly, when the sealer 55 is formed of a single silicone foam, the sealer 55 may be broken by friction between the sealer 55 and the side wall portion 49. Thus, in the first embodiment of the present disclosure, the PTFE felt having a higher sliding property is used as a material of the first sealing layer 61 that is in contact with the side wall portion 49.

In an embodiment of the present disclosure, in the container, the first sealing layer and the second sealing layer are formed by a heat resistant material.

In an embodiment of the present disclosure, in the container, the second sealing layer has a compressibility higher than a compressibility of the first sealing layer.

In an embodiment of the present disclosure, in the container, the first sealing layer is formed by a slidable material.

In an embodiment of the present disclosure, in the container, the first sealing layer is formed by a polytetrafluorethylene felt.

As described above, in the first embodiment of the present disclosure, since the PTFE felt is used as the material of the first sealing layer 61 and the silicone foam is used as the material of the second sealing layer 62, the sealer 55 having properties such as a sliding property, a sealing property, and heat resistance can be obtained. In other words, since the PTFE felt having a higher sliding property is used as the material of the first sealing layer 61 that is in contact with the side wall portion 49, the sliding property of the sealer 55 with respect to the side wall portion 49 can be obtained, and the abrasion and breakage of the sealer 55 accompanied with the sliding can be prevented. In addition, since the silicone foam that forms the second sealing layer 62 obtains the sealing property that is less likely to be obtained by using PTFE felt alone, the leakage of the fabrication material 20 can be prevented. Further, since both the PTFE felt and the silicone foam have higher heat resistance and smaller permanent deformation under a high-temperature environment, the function of the sealer 55 is not easily deteriorated even when the drying process is conducted. Thus, according to the first embodiment of the present disclosure, the sealer 55 that is suitable for a high-temperature environment and can maintain a sliding property and a sealing property for a long period of time can be provided. As a result, the leaking of the fabrication material 20 from the gap between the fabrication stage 24 and the side wall portion 49 can be prevented and the smooth rising-and-falling operation of the fabrication stage 24 can be achieved. In addition, since the smooth rising-and-falling operation of the fabrication stage 24 can be achieved, the fabrication stage 24 can rise and fall without using a driving source having a large output, and thus, miniaturization and cost reduction can also be achieved.

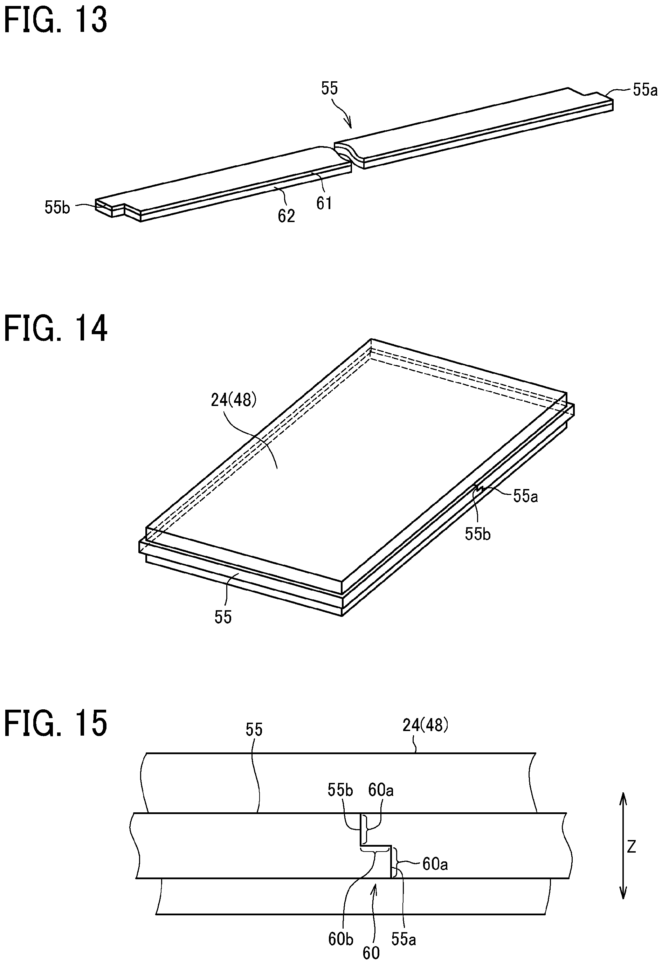

FIG. 13 is a diagram illustrating the sealer 55 as a single component before being attached to a fabrication stage 24 according to the first embodiment of the present disclosure. FIG. 14 is a diagram illustrating the sealer 55 attached to the fabrication stage 24 according to the first embodiment of the present disclosure.

As illustrated in FIG. 13, the sealer 55 is formed in a belt shape having both ends 55a and 55b. Thus, the sealer 55 is attached to the fabrication stage 24 by winding the sealer 55 around the entire circumference of the fabrication stage 24 and connecting the both ends 55a and 55b of the sealer 55 to each other as illustrated in FIG. 14. Alternatively, multiple sealers 55 shorter than the circumferential length of the fabrication stage 24 may be prepared, and the multiple sealers 55 may be connected with each other along the entire circumference of the fabrication stage 24. As a method of attaching the sealer 55 to the fabrication stage 24, it is preferable to adhere the sealer 55 to the fabrication stage 24 by a double-sided adhesive tape in terms of attaching property and exchangeability. Further, the sealer 55 may be attached by other attaching methods.

In an embodiment of the present disclosure, in the container, the sealer includes a belt having both ends.

FIG. 15 is a diagram illustrating a structure of a connecting portion 60 of the sealer 55 according to the first embodiment of the present disclosure. As illustrated in FIG. 15, in the first embodiment of the present disclosure, the connecting portion 60 that connects the both ends 55a and 55b of the sealer 55 is formed in an unevenness shape or a stepped shape. In other words, the connecting portion 60 is formed in an unevenness shape or a stepped shape by fitting a protrusion formed on one of the two ends 55a and 55b of the sealer 55 with a recess formed on the other end. Thus, the connecting portion 60 has a pair of vertical portions 60a extending in the vertical direction Z and arranged alternately, and a portion 60b extending in a direction orthogonal to the vertical direction Z so as to connect the vertical portions 60a. Since the connecting portion 60 has not only the portion extending in the vertical direction Z but also the portion 60b extending in the direction orthogonal to the vertical direction Z, the leakage of the fabrication material 20 from the connecting portion 60 is less likely to occur.

The protrusion may have a curved surface such as a convex, and the recess may have a curved surface such as a concave.

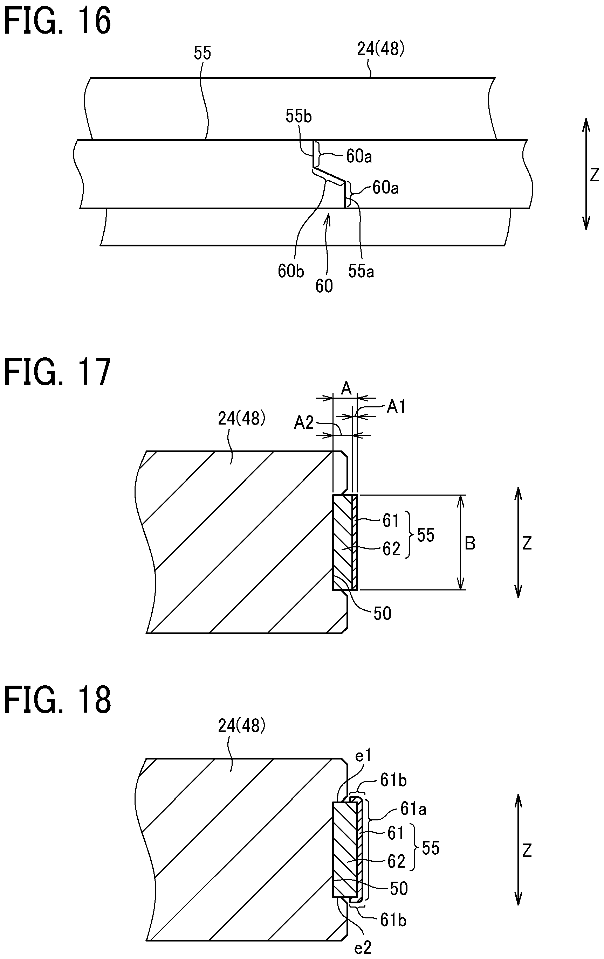

As illustrated in FIG. 16, the connecting portion 60 may have a shape including a portion 60c extending in an oblique direction with respect to the vertical direction Z. In this case, the leakage of the fabrication material 20 from the connecting portion 60 is less likely to occur as compared with the case where the entire of the connecting portion 60 extends in the vertical direction Z. As described above, the connecting portion 60 has a shape having a portion extending in a direction intersecting with the vertical direction (Z-direction) and a direction oblique to the vertical direction Z, in addition to a direction orthogonal to the vertical direction Z. The connecting portion 60 may have a shape formed by a combination of multiple straight lines, a combination of straight lines and curved lines, or a shape formed by only curved lines.

In an embodiment of the present disclosure, in the container, the belt includes a connecting portion connecting both ends of the belt, and the connecting portion has a portion extending in a direction intersecting the first direction parallel to a vertical direction.

FIG. 17 is a cross-sectional view of the sealer 55 in an uncompressed and unloaded state, according to the first embodiment of the present disclosure.

The compression amount of the sealer 55 between the fabrication stage 24 and the side wall portion 49 is preferably set to an appropriate value. If the compression amount is too small, a good sealing property may not be obtained, and if the compression amount is too large, on the contrary, sliding resistance may increase and permanent strain may increase.

Thus, the compression amount of the sealer 55 is preferably set to 15% or more and 35% or less of the thickness A in the unloaded state in which the sealer 55 is not compressed. The "thickness A in the unloaded state" indicates the entire dimension of the sealer 55 in the compression direction in the unloaded state, and is the sum of the thickness A1 of the first sealing layer 61 and the thickness A2 of the second sealing layer 62 in the unloaded state. Since the compression amount of the sealer 55 is set to 15% or more and 35% or less of the thickness A in the unloaded state, the permanent deformation of the sealer 55 caused by the drying process can be prevented, and the sealing property and the sliding property can be also obtained preferably.

In an embodiment of the present disclosure, in the container, the sealer is compressed between the bottom portion and the side wall portion, and the sealer compressed has a thickness having a compressing ratio of 15% or more and 35% or less of a thickness of the sealer uncompressed.

The thickness A2 of the second sealing layer 62 in the unloaded state is preferably set to be three times or more of the thickness A1 of the first sealing layer 61 in the unloaded state. As described above, since the thickness A2 of the second sealing layer 62 in the unloaded state is set to be three times or more of the thickness A1 of the first sealing layer 61 in the unloaded state and the thickness of the second sealing layer 62 is increased, the repulsive force generated at a time when the second sealing layer 62 is compressed can be reduced. Accordingly, an increase in sliding resistance due to the repulsive force of the second sealing layer 62 can be prevented, and a good sliding property can be effectively obtained.

In an embodiment of the present disclosure, in the container, the second sealing layer has a thickness three times or more of the first sealing layer when the sealer is not compressed between the bottom portion and the side wall portion.

The width B of the sealer 55 in the vertical direction Z is preferably set to be twice or more of the thickness A in the unloaded state. As described above, since the width B of the sealer 55 in the vertical direction Z is set to be twice or more of the thickness A in the unloaded state and the width B of the sealer 55 in the vertical direction Z is set to be larger, the second sealing layer 62 is less likely to be damaged. Accordingly, even in the structure in which the silicone foam having lower strength against shearing force is used as the material of the second sealing layer 62, the breakage of the second sealing layer 62 caused by the sliding of the sealer 55 can be prevented, and the durability of the sealer 55 can be increased.

In an embodiment of the present disclosure, in the container, the sealer has a width in the first direction parallel to a vertical direction twice or more of a thickness of the sealer uncompressed in the second direction .

As illustrated in FIG. 17, the portion of the fabrication stage 24 on which the sealer 55 is mounted is preferably a recess 50 having a ring shape and the same width as the width B of the sealer 55 in the vertical direction Z. Since the mounting portion of the sealer 55 is the recess 50, the sealer 55 is less likely to be peeled off from the fabrication stage 24. In other words, even if the sealer 55 receives a force in the vertical direction Z due to the sliding resistance in accordance with the rising-and-falling operation of the fabrication stage 24, the sealer 55 is held by the inner face of the recess 50 so as not to move in the vertical direction Z with respect to the fabrication stage 24. Thus, the peeling of the sealer 55 is prevented. As a result, the sealing property between the fabrication stage 24 and the side wall portion 49 can be preferably maintained.

The recess 50 may have a curved surface such as a concave.

In an embodiment of the present disclosure, in the container, the circumference of the bottom portion has a recess surrounding the circumference of the bottom portion, and the second sealing layer is buried in the recess of the bottom portion.

### Configuration of Other Embodiments

A second embodiment of the present disclosure will be described. In the following description, the parts different from those of the first embodiment of the present disclosure will be mainly described, and the description of the same parts will be appropriately omitted.

FIG. 18 is a cross-sectional view of a sealer 55 according to a second embodiment of the present disclosure. As illustrated in FIG. 18, in the second embodiment of the present disclosure, the first sealing layer 61 is configured to cover at least a part of both ends e1 and e2 of the second sealing layer 62 in the vertical direction Z. In other words, the first sealing layer 61 includes a sliding portion 61a that covers the face of the second sealing layer 62 facing the side wall portion 49 (i.e., covers the face of the second sealing layer 62 facing the right side in FIG. 18), and a pair of holding portions 61b formed integrally with the sliding portion 61a and holds at least a part of both ends e1 and e2 of the second sealing layer 62 in the vertical direction Z. The sliding portion 61a is a portion that is in contact with the side wall portion 49 and slides with respect to the side wall portion 49 when the fabrication stage 24 rises or falls. On the other hand, the pair of holding portions 61b hold both ends e1 and e2 of the second sealing layer 62 in the vertical direction Z, and restrict the deviation of the first sealing layer 61 from the second sealing layer 62 in the vertical direction Z.

In an embodiment of the present disclosure, in the container, the first sealing layer covers at least a portion of both ends of the second sealing layer in the vertical direction.

As described above, the first sealing layer 61 includes the pair of holding portions 61b that hold at least a part of both ends e1 and e2 of the second sealing layer 62 in the vertical direction Z, and the first sealing layer 61 is less likely to be peeled from the second sealing layer 62. In other words, even if a force in the vertical direction Z is applied to the first sealing layer 61 by friction when the sealer 55 slides, the pair of holding portions 61b restrict the displacement of the first sealing layer 61 in the vertical direction Z with respect to the second sealing layer 62, so that the peeling of the first sealing layer 61 from the second seal layer 62 is prevented. As a result, the durability of the sealer 55 is increased and the sealing property between the fabrication stage 24 and the side wall portion 49 can be preferably maintained.

### Fabricating Material

An example of the fabrication material 20 used in the present disclosure will be described below.

The fabrication material 20 contains multiple metal particles. The fabrication material 20 may contain other components used as necessary in addition to the metal particles. Examples of the other components include a filler, a leveling agent, a sintering aid, and polymer resin particles.

### Metal Particle

The metal particle is a particle containing a metal as a constituent material of a fabricated object. The metal particle is not particularly limited to a specific metal as long as the metal particle contains a metal, and may contain a material other than a metal. However, it is preferable that the main material is a metal. The description "the main material is metal" represents that the mass of the metal contained in the metal particle is 50.0 mass% or more with respect to the mass of the metal particle. The mass of the metal contained in the metal particle is preferably 60.0 mass% or more, more preferably 70.0 mass% or more, still more preferably 80.0 mass% or more, and particularly preferably 90.0 mass% or more.

Examples of the metal as a constituent material of the metal particle include magnesium (Mg), aluminum (Al), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), neodymium (Nd), and alloys of these metals. Among these, iron (Fe), copper (Cu), silver (Ag), titanium (Ti), and aluminum (Al), and alloys of these metals and stainless steel (SUS) are preferably used. Examples of aluminum alloys include AlSi10Mg, AlSi12, AlSi7Mg0.6, AlSi3Mg, AlSi9Cu3, Scalmalloy (Registered Trademark), aluminum alloy die castings 12 (ADC 12), and AlSi3.

These metals and alloys may be used alone or in combination thereof.

The volume average particle diameter of the metal particles is not particularly limited and can be appropriately selected depending on the purpose, and is preferably, for example, 2 micrometers (µm) or more and 100 µm or less, and more preferably 8 µm or more and 50 µm or less. The volume average particle diameter and the particle size distribution of the metal particles can be measured using a known particle size measuring device, for example, a particle size distribution measuring device MICROTRAC MT3000II series (manufactured by MicrotracBell Corp.).

### Forming Liquid

An example of the fabrication liquid 10 used in the present disclosure will be described.

The fabrication liquid 10 contains at least a resin and an organic solvent. The fabrication liquid 10 may further contain additives and other components.

The fabrication liquid 10 preferably has a viscosity of 5 milli Pascal-second (mPa·s)·s or more and 50 mPa·s or less, more preferably 5 mPa·s or more and 40 mPa·s or less, still more preferably 5 mPa·s or more and 30 mPa·s or less, at 25°C. The viscosity can be measured, for example, in accordance with Japanese Industrial Standards (JIS) K7117. As a result, the discharging of the fabrication liquid 10 is stabilized, and the bending strength of the fabricated object before sintering is further increased, and the dimensional accuracy is also increased.

### Resin

The resin contained in the fabrication liquid 10 functions as a binder. The resin is preferably thermally decomposed by 95 mass% or more, more preferably 97 mass% or more, when heated from 30°C to 550°C. The description "the resin is thermally decomposed" represents that random decomposition of the main chain or depolymerization at the end of the molecular chain occurs and the resin is removed by vaporization, oxidative decomposition, or combustion. The thermal decomposition property is measured by a thermogravimetry differential thermal analyzer (TG-DTA). Specifically, the weight loss rate before and after the temperature rise is determined when the temperature is raised from 30°C to 550°C at 10°C / min. in the atmosphere or a nitrogen atmosphere and the temperature is maintained for 2 hours after the temperature reaches 550°C.

The number average molecular weight (Mn) of the resin is preferably 5,000 or more and 50,000 or less, and more preferably 10,000 or more and 30,000 or less. The resin has at least one structural unit selected from the group consisting of structural units represented by Structural Formula 1 and structural units represented by Structural Formula 2. The term "structural unit" refers to a partial structure in a resin derived from one or more polymerizable compounds. For example, the resin may be polyvinyl acetate resin, partially saponified polyvinyl acetate resin, or polyvinyl butyral resin. These resins may be used alone or in combination of two or more. As these resins, both commercial products and synthetic products may be available. The partially saponified polyvinyl acetate resin is a resin in which a polyvinyl acetate resin is partially saponified.

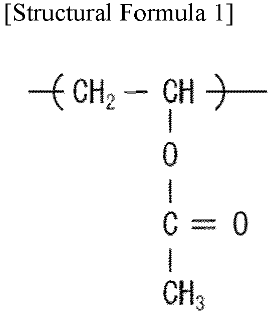

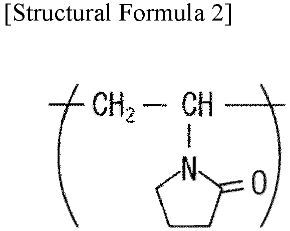

In the resin, the structural unit represented by Structural Formula 1 has hydrophobicity. The resin having the structural unit represented by Structural Formula 1 is soluble in the organic solvent of the fabrication liquid 10 and preferably insoluble in water. The resin having the structural unit represented by Structural Formula 1 may be either a resin having a structural unit other than Structural Formula 1 or a resin not having a structural unit other than Structural Formula 1. As the structural unit represented by a structural formula other than Structural Formula 1, for example, a structural unit represented by Structural Formula 3 below, and a structural unit represented by Structural Formula 4 below are preferable.

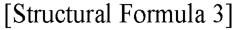

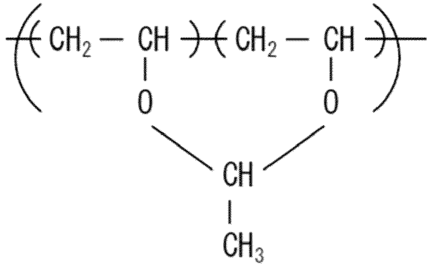

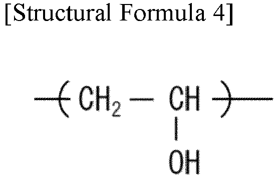

Since the structural unit represented by Structural Formula 3 also has hydrophobicity, the solubility of the resin in an organic solvent is increased. The affinity of the fabrication liquid 10 with the metal particles in the powder layer to which the fabrication liquid 10 is added is increased by the hydroxyl group in the structural unit represented by Structural Formula 4.

The polyvinyl acetate resin has the structural unit represented by Structural Formula 1. On the other hand, the polyvinyl acetate resin is a resin basically not having the structural unit represented by Structural Formula 3 and the structural unit represented by Structural Formula 4. A partially saponified polyvinyl acetate resin has the structural unit represented by Structural Formula 1 and the structural unit represented by Structural Formula 4. On the other hand, the partially saponified polyvinyl acetate resin is a resin basically not having the structural unit represented by Structural Formula 3. The polyvinyl butyral resin is a resin having the structural unit represented by Structural Formula 1 and the structural unit represented by Structural Formula 3, or a resin having the structural unit represented by Structural Formula 1, the structural unit represented by Structural Formula 3, and the structural unit represented by Structural Formula 4.

### Organic Solvent

The organic solvent contained in the fabrication liquid 10 is a liquid component and brings the fabrication liquid 10 into a liquid state at room temperature. Since the fabrication liquid 10 contains an organic solvent, the fabrication liquid is preferably a non-aqueous fabrication liquid. The non-aqueous fabrication liquid is a fabrication liquid containing an organic solvent as a liquid component, and the liquid component having the largest mass among the liquid components is an organic solvent. In the non-aqueous fabrication liquid, the content of the organic solvent is preferably 90.0 mass% or more, more preferably 95.0 mass% or more, relative to the content of the liquid component in the fabrication liquid. The non-aqueous fabrication liquid is, for example, a fabrication liquid basically containing no water.

The organic solvent preferably has a viscosity of 5.0 mPa s or more and 50.0 mPa s or less, more preferably 8.0 mPa s or more and 30.0 mPa s or less, at 25°C.

The viscosity can be measured, for example, in accordance with JIS K7117.

The boiling point of the organic solvent is preferably 150°C or higher, more preferably 180°C or higher. When the boiling point of the organic solvent is high, drying of the fabrication liquid 10 is prevented. The organic solvent is not particularly limited, and, for example, γ-butyrolactone (boiling point: 204°C), propylene carbonate (boiling point: 242°C), cyclohexanone (boiling point: 155.6°C), diethylene glycol dimethyl ether (boiling point: 162°C), or triethylene glycol dimethyl ether (boiling point: 216°C).

In addition, examples thereof include n-octane, m-xylene, solvent naphtha, diisobutyl ketone, 3-heptanone, 2-octanone, acetyl acetone, butyl acetate, amyl acetate, n-hexyl acetate, n-octyl acetate, ethyl butyrate, ethyl valerate, ethyl caprylate, ethyl octanoate, ethyl acetoacetate, ethyl 3-ethoxypropionate, ethyl oxalate, diethyl succinate, diethyl malonate, diethyl succinate, diethyl adipate, bis 2-ethylhexyl maleate, triacetin, tributyrin, propylene glycol monomethyl ether acetate, ethylene glycol monobutyl ether acetate, dibutyl ether, 1, 2-dimethoxybenzene, 1, 4-dimethoxybenzene, diethylene glycol monobutyl ether, diethylene glycol dimethyl ether, triethylene glycol dimethyl ether, 2-methoxy-1-methylethyl acetate, γ-butyrolactone, propylene carbonate, cyclohexanone, and butyl cellosolve.

These may be used alone or in combination of two or more.

When a resin having the structural unit represented by Structural Formula 1 is used, the organic solvent to be used in combination is not particularly limited. For example, an organic solvent having at least one structure selected from the group consisting of an alkoxy group, an ether bond, and an ester bond is preferably used, an organic solvent having an ether bond is more preferably used, and an alkylene glycol dialkyl ether is particularly preferably used. When these organic solvents are used, the solubility of the resin having the structural unit represented by Structural Formula 1 is further increased. The term "alkylene glycol dialkyl ethers" is represented by R₁ - (O - R₂)m - OR₃, where R₁ and R₃ are each independently an alkyl group having 1 to 5 carbon atoms, may be linear or branched, and preferably have 1 or 2 carbon atoms, R₂ is an alkylene group having 2 to 5 carbon atoms, may be linear or branched, and preferably has 2 or 3 carbon atoms, and m represents an integer of 1 to 5, and is more preferably 2 or 3. Specific examples of the alkylene glycol dialkyl ethers include diethylene glycol dimethyl ether, triethylene glycol dimethyl ether, diethylene glycol ethyl methyl ether, and diethylene glycol butyl methyl ether, and among these, diethylene glycol dimethyl ether and triethylene glycol dimethyl ether are preferable, and triethylene glycol dimethyl ether is more preferable.

When a resin having the structural unit represented by Structural Formula 2 is used, the organic solvent used in combination is preferably a polar solvent. Specifically, it is preferable to use at least one selected from the group consisting of cyclic esters (lactones), cyclic ketones, and alkylene glycol monoalkyl ethers, i.e., component 1, and it is more preferable to further use at least one selected from the group consisting of alkylene glycol dialkyl ethers, i.e., component 2, in addition to at least one selected from the component 1. When these organic solvents are used, the solubility of the resin having the structural unit represented by Structural Formula 2 is further increased.

In order to further increase the solubility of the resin having the structural unit represented by Structural Formula 2, the component 1 is preferably a group consisting of cyclic esters (lactones) and cyclic ketones. Specific examples of the component 1 that is a group consisting of cyclic esters (lactones), cyclic ketones, and alkylene glycol monoalkyl ethers include γ-butyrolactone, propylene carbonate, and cyclohexanone.

Specific examples of the component 2 that is a group consisting of alkylene glycol dialkyl ethers include diethylene glycol dimethyl ether, triethylene glycol dimethyl ether, diethylene glycol ethyl methyl ether, and diethylene glycol butyl methyl ether. Among these, diethylene glycol dimethyl ether and triethylene glycol dimethyl ether are preferred.

The term "alkylene glycol monoalkyl ethers" refers to R₄ - (O - R₅)n - OH, where R₄ is an alkyl group having 1 to 5 carbon atoms, and may be linear or branched, R₅ is an alkylene group having 2 to 5 carbon atoms, and may be linear or branched, and n represents an integer of 1 to 5.

Additive The fabrication liquid 10 may contain a surfactant, a drying inhibitor, a viscosity modifier, a penetration agent, an antifoaming agent, a pH modifier, a preservative, an antifungal agent, a coloring agent, a preservative, and a stabilizer, as appropriate, according to the purpose.

### Other Components

### Water

The fabrication liquid 10 contains basically no water. The description "the fabrication liquid contains no water" represents that water is not positively used as a material in the production of the fabrication liquid 10 or that the content of water in the fabrication liquid 10 is equal to or less than a detection limit in a case where a known method in the related art and having common general knowledge is used. The content of water is preferably 10.0 mass% or less, and more preferably 5.0 mass% or less, with respect to the mass of the fabrication liquid 10. The content of water is more preferably 3.0 mass% or less, still more preferably 1.0 mass% or less, with respect to the mass of the fabrication liquid 10, and it is particularly preferable that the fabrication liquid 10 does not contain water. Since the fabrication liquid 10 basically contains no water, the solubility of the resin increases. As a result, the viscosity of the fabrication liquid 10 can be further decreased. In addition, the formation of a hydrogel containing a large amount of water around the resin is prevented, and the increase in viscosity of the fabrication liquid 10 accompanying the prevention of forming the hydrogel is prevented.

The embodiments of the present disclosure have been described above. However, the present disclosure is not limited to the configurations of the first and second embodiments, and can be appropriately modified in design without departing from the scope of the present disclosure.

In the first and second embodiments of the present disclosure, the sealer 55 used in the fabrication chamber 22 is exemplified by the sealer having the two-layer structure of the first sealing layer 61 and the second sealing layer 62 made of different materials. However, the sealer 55 is not limited to the two-layer structure, and may have three or more layers. For example, another layer may be interposed between the first sealing layer 61 and the second sealing layer 62.

The embodiment of the present disclosure is not limited to an application of the sealer 55 used for the fabrication chamber 22, and can be applied to a sealer used for other container portions. For example, the embodiment of the present disclosure can be applied to a sealer that seals a gap between a bottom portion (supply stage 23) of the supply chamber 21 and a side wall portion disposed around the bottom portion. In this case, when the sealer has different materials at a portion of the sealer in contact with the side wall portion and at another portion of the sealer closer to the bottom portion than the portion in contact with the side wall portion, a sealer suitable for the supply chamber 21 can be provided. The material of the sealer may be appropriately changed according to the type of powder accommodated in the container, the structure of the container, and the mode of use.

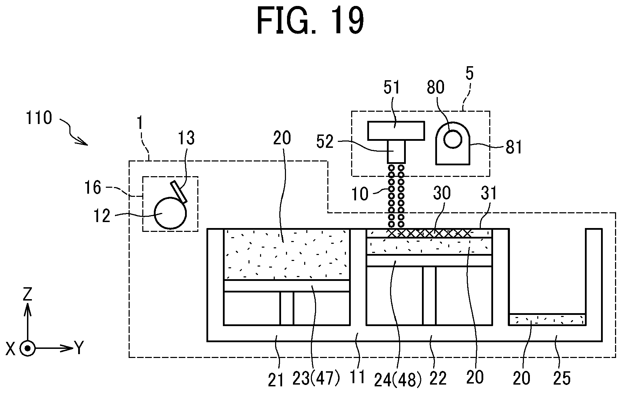

FIG. 19 is a diagram illustrating a fabricating apparatus according to the second embodiment of the present disclosure. The present disclosure is not limited to the fabricating system including the fabricating apparatus of the power layer fabricating method as illustrated in FIG. 3, and can be used for the fabricating system including the fabricating apparatus of the high speed sintering (HSS) method as illustrated in FIG. 19.

### Configuration of Another Forming Apparatus

The configuration of the HSS fabricating apparatus will be described below with reference to FIG. 19.

The HSS fabricating apparatus 110 illustrated in FIG. 19 is different from the fabricating apparatus 100 using the powder layer fabricating method illustrated in FIG. 3 in the structure of the fabrication liquid adding device 5. Specifically, the liquid adding device 5 of the HSS fabricating method includes a head 52 that adds the fabrication liquid 10 containing a radiation energy absorber, a radiation energy irradiating device 80, and a reflecting portion 81. Since the other components are the same as those of the first embodiment of the present disclosure, the same reference numerals as those in FIG. 3 are used and the description thereof is omitted.

The radiation energy irradiating unit 80 is a device that emits radiation energy that activates the radiation energy absorber. The radiation energy may be any energy that activates the radiation energy absorber, and, for example, light or electromagnetic radiation. The radiation energy irradiating unit 80 may be, for example, a light source such as a halogen lamp, a light-emitting diode (LED), a laser diode (LD), a flash lamp, a xenon lamp, or a spherical lamp. The radiation energy irradiating unit 80 can reciprocally move in two directions (X-direction and Y-direction in FIG. 19) orthogonal to each other on the horizontal plane and in the vertical direction (Z-direction in FIG. 19). The radiation energy irradiating unit 80 may be disposed on the carriage 51 on which the head 52 is mounted and may move together with the head 52 or independently of the head 52. The radiation energy irradiating unit 80 may be disposed on either the left side or the right side of the head 52 in FIG. 19, or may be disposed on both the left and right sides of the head 52.

The reflecting portion 81 reflects the radiation energy emitted from the radiation energy irradiating unit 80. For example, the reflecting portion 81 is formed in a substantially dome shape having a curved face, and is opened toward the fabrication chamber 22 (downward in FIG. 19). When the radiation energy is emitted from the radiation energy irradiation unit 80, the radiation energy is collected by the curved face of the reflecting portion 81, and the powder layer 31 in the fabrication chamber 22 is irradiated with the radiation energy. Accordingly, the area of the powder layer 31 irradiated with the radiation energy is smaller than the area of the opening of the reflecting portion 81.

The fabrication liquid adding device 5 adds a fabrication liquid 10 containing a radiation energy absorber to the powder layer 31 formed in the fabrication chamber 22. The radiation energy irradiation unit 80 irradiates the powder layer 31 with radiation energy. For example, when the radiation energy absorber is a near infrared dye (NIRD) or a near infrared pigment (NIRP), the radiation energy irradiation unit 80 irradiates the powder layer 31 with electromagnetic radiation having a wavelength of about 800 nanometers (nm) to about 1400 nm. As a result, the radiation energy absorber contained in the fabrication liquid 10 absorbs electromagnetic radiation, and the absorbed energy is converted into thermal energy, and the fabrication material 20 is fused and bonded. The fabrication liquid 10 may contain a coloring agent in addition to the radiation energy absorber. The fabrication liquid 10 containing a radiation energy absorber may not be used. Alternatively, the fabrication material 20 itself containing a radiation energy absorbing material may be used, and the fabrication material 20 can be bonded by irradiation of radiation energy.

In the fabricating system including the HSS fabricating apparatus 110, the embodiments of the present disclosure can also provide a sealer having a desired property as a sealer used for a container such as the fabrication chamber 22 or the supply chamber 21.

The embodiments of the present disclosure are not limited to the fabricating apparatus of the powder layer fabricating method and the fabricating apparatus of the HSS method, and can be applied to the fabricating apparatus of the selective laser sintering (SLS) method that forms an object by selective laser irradiation.

The fabricating system to which the present disclosure is applied is not limited to the one including all of the fabricating apparatus 100, the drying apparatus 200, the removing apparatus 300, and the sintering apparatus 400, but may include at least one of the drying apparatus 200, the removing apparatus 300, or the sintering apparatus 400 in addition to the fabricating apparatus 100.

As described above, aspects of the present disclosure are, for example, as follows.

### First Aspect

A container includes a bottom portion movable in a first direction, a side wall portion surrounding a circumference of the bottom portion, a sealer attached to the circumference of the bottom portion to seal a gap between the circumference of the bottom portion and the side wall portion in a second direction intersecting the first direction. The sealer includes a first sealing layer in contact with the side wall portion and formed by a first material, and a second sealing layer attached to the bottom portion and formed by a second material different from the first material of the first sealing layer.

### Second Aspect

In the container according to the first aspect, the sealer surrounds entire of the circumference of the bottom portion.

### Third Aspect

In the container according to the first or second aspect, the sealer surrounds entire of the circumference of the bottom portion.

### Fourth Aspect

In the container according to any one of the first to third aspects, the sealer moves together with the bottom portion in the vertical direction.

### Fifth Aspect

In the container according to any one of the first to fourth aspects, at least a part of the first sealing layer is in contact with the second sealing layer.

### Sixth Aspect

In the container according to any one of the first to fifth aspects, the circumference of the bottom portion has a recess surrounding the circumference of the bottom portion, and the sealer is in the recess of the bottom portion.

### Seventh Aspect

In the container according to any one of the first to sixth aspects, the first sealing layer and the second sealing layer are formed by a heat resistant material.

### Eighth Aspect

In the container according to any one of the first to seventh aspects, the second sealing layer has a compressibility higher than a compressibility of the first sealing layer.

### Ninth Aspect

In the container according to any one of the first to eighth aspects, the first sealing layer is formed by a slidable material.

### Tenth Aspect

In the container according to any one of the first to ninth aspects, the first sealing layer is formed by a polytetrafluorethylene felt.

### Eleventh Aspect

In the container according to any one of the first to tenth aspects, the second sealing layer is formed by a silicone foam.

### Twelfth Aspect

In the container according to any one of the first to eleventh aspects, the sealer includes a belt having both ends.

### Thirteenth Aspect

In the container according to the twelfth aspect, the belt includes a connecting portion connecting both ends of the belt, and the connecting portion has a portion extending in a direction intersecting the first direction parallel to a vertical direction.

### Fourteenth Aspect

In the container according to any one of the first to thirteenth aspect, the sealer is compressed between the bottom portion and the side wall portion, and the sealer compressed has a thickness having a compressing ratio of 15% or more and 35% or less of a thickness of the sealer uncompressed.

### Fifteenth Aspect

In the container according to any one of the first to fourteenth aspects, the second sealing layer has a thickness three times or more of a thickness of the first sealing layer when the sealer is not compressed between the bottom portion and the side wall portion.

### Sixteenth Aspect

In the container according to any one of the first to fifteenth aspects, the sealer has a width in the first direction parallel to a vertical direction twice or more of a thickness of the sealer uncompressed in the second direction.

### Seventeenth Aspect

In the container according to any one of the first to sixteenth aspects, the circumference of the bottom portion has a recess surrounding the circumference of the bottom portion, and the second sealing layer is buried in the recess of the bottom portion.

### Eighteenth Aspect

In the container according to any one of the first to seventeenth aspects, the first sealing layer covers at least a portion of both ends of the second sealing layer in the vertical direction.

### Nineteenth Aspect

In the container according to any one of the first to eighteenth aspects, the container accommodates a fabrication material containing metal or metal powder.

### Twentieth Aspect

A fabricating apparatus includes the container according to any one of the first to nineteenth aspects, and a fabrication liquid adding device to add a fabrication liquid to a fabrication material accommodated in the container to fabricate a fabricated object.

### Twenty-first Aspect

A fabricating system comprising: the fabricating apparatus according to the twentieth aspect and a least one of a drying apparatus to dry an object fabricated by the fabricating apparatus, a removing apparatus to remove an excess fabrication material attached to the fabricated object, or a sintering apparatus to sinter the fabricated object.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

1. A container (22) comprising:
a bottom portion (48) movable in a first direction;
a side wall portion (49) surrounding a circumference of the bottom portion (48);
a sealer (55) attached to the circumference of the bottom portion (48) to seal a gap between the circumference of the bottom portion (48) and the side wall portion (49) in a second direction intersecting the first direction,
the sealer (55) including:
a first sealing layer (61) in contact with the side wall portion (49) and formed by a first material; and
a second sealing layer (62) attached to the bottom portion (48) and formed by a second material different from the first material of the first sealing layer (61).

2. The container (22) according to claim 1,
wherein the sealer (55) surrounds entire of the circumference of the bottom portion (48).

3. The container (22) according to claim 1,
wherein the bottom portion (48) is movable in the first direction parallel to a vertical direction (Z).

4. The container (22) according to claim 1,
wherein at least a part of the first sealing layer (61) is in contact with the second sealing layer (62).

5. The container (22) according to claim 1,
wherein the circumference of the bottom portion (48) has a recess surrounding the circumference of the bottom portion (48), and
the sealer (55) is in the recess of the bottom portion (48).

6. The container (22) according to claim 1,
wherein the first sealing layer (61) and the second sealing layer (62) are formed by a heat resistant material.

7. The container (22) according to claim 1,
wherein the second sealing layer (62) has a compressibility higher than a compressibility of the first sealing layer (61).

8. The container (22) according to claim 1,
wherein the sealer (55) includes a belt having both ends (55a, 55b).

9. The container (22) according to claim 8,
wherein the belt includes a connecting portion (60) connecting said both ends (55a, 55b) of the belt, and
the connecting portion (60) has a portion extending in a direction intersecting the first direction parallel to a vertical direction (Z).

10. The container (22) according to claim 1,
wherein the sealer (55) is compressed between the bottom portion (48) and the side wall portion (49), and
the sealer compressed has a thickness having a compressing ratio of 15% or more and 35% or less of a thickness of the sealer (55) uncompressed.

11. The container (22) according to claim 1,
wherein the second sealing layer (62) has a thickness three times or more of a thickness of the first sealing layer (61) when the sealer is not compressed between the bottom portion (48) and the side wall portion (49).

12. The container (22) according to claim 1,
wherein the sealer (55) has a width in the first direction parallel to a vertical direction (Z) twice or more of a thickness of the sealer (55) uncompressed in the second direction.

13. The container (22) according to claim 1,
wherein the circumference of the bottom portion (48) has a recess surrounding the circumference of the bottom portion (48), and
the second sealing layer (62) is buried in the recess of the bottom portion (48).

14. The container (22) according to claim 1,
wherein the first sealing layer (61) covers at least a portion of both ends (e1, e2) of the second sealing layer (62) in the first direction parallel to a vertical direction (Z).

15. A fabricating system (1000) comprising:
a fabrication apparatus (100) including the container (22) according to claim 1, the container (22) accommodating a fabrication material containing metal or metal power;
a fabrication liquid applicator (5) to apply a fabrication liquid to the fabrication material accommodated in the container (22) to fabricate a fabricated object; and
at least one of:
a drying apparatus (200) to dry the fabricated object,
a removing apparatus (300) to remove an excess fabrication material attached to the fabricated object; or
a sintering apparatus (400) to sinter the fabricated object.
